(19) Europäisches Patentamt
European Patent Office
Office européen des brevets

(11) **EP 4 730 775 A1**

(12) **EUROPEAN PATENT APPLICATION**

(43) Date of publication:
22.04.2026 Bulletin 2026/17

(21) Application number: 24306718.8

(22) Date of filing: 17.10.2024

(51) International Patent Classification (IPC):
*H04N 19/11* (2014.01)  *H04N 19/105* (2014.01)
*H04N 19/147* (2014.01)  *H04N 19/176* (2014.01)
*H04N 19/593* (2014.01)

(52) Cooperative Patent Classification (CPC):
H04N 19/593; H04N 19/105; H04N 19/11;
H04N 19/147; H04N 19/176

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• CHEN, Ya
  35700 RENNES (FR)
• NASER, Karam
  35250 MOUAZE (FR)
• RADOSAVLJEVIC, Milos
  35000 RENNES (FR)
• LE LEANNEC, Fabrice
  35830 BETTON (FR)

(74) Representative: Vossius & Partner
Patentanwälte Rechtsanwälte mbB
Siebertstraße 3
81675 München (DE)

(54) **ADAPTIVE PREDICTION SELECTION**

(57)     Adaptive prediction selection is disclosed. A video coding device, which may be, for example, an encoder device or a decoder device, may comprise at least one processor configured to derive, for a block, a set of block vector-based intra prediction modes. The set of block vector-based intra prediction modes may be associated with at least of DIMD or OBIC. The video coding device may derive a set of angular prediction modes based on a histogram associated with a plurality of neighboring samples of the block. The video coding device may obtain a fused prediction of the block based on at least one derived block vector-based intra prediction mode, at least one derived angular prediction mode, and a planar mode. The video coding device may encode or decode the block based on the fused prediction.

FIG. 4b

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for adaptive prediction selection. A video coding device, which may be, for example, an encoder device or a decoder device, may comprise at least one processor configured to derive, for a block, a set of block vector-based intra prediction modes. The video coding device may derive a set of angular prediction modes based on a histogram associated with a plurality of neighboring samples of the block. For example, the set of angular prediction modes may be derived based on a histogram of gradients based on the neighboring samples of the block. For example, the set of angular prediction modes may be derived based on a histogram of intra prediction mode occurrence. The histogram of intra prediction mode occurrence may indicate intra modes and their associated sample-wise occurrences in a spatial neighborhood of the block.

The video coding device may obtain a fused prediction of the block based on at least one derived block vector-based intra prediction mode, at least one derived angular prediction mode, and a planar mode. The video coding device may encode or decode the block based on the fused prediction.

The set of block vector-based intra prediction modes may be associated with at least one of an intra template matching prediction (TMP) mode, an intra block copy (IBC), a decoder side intra mode derivation (DIMD) mode, a spatial geometric partition mode (SGPM), an occurrence-based intra coding (OBIC) mode, or a template-based intra mode derivation (TIMD) mode.

The video coding device may be further configured to calculate respective template costs associated with the set of derived block vector-based intra prediction modes. The video coding device may calculate respective template costs associated with the set of derived angular prediction modes, and calculate a template cost associated with the planar mode. The video coding device may select the at least one derived block vector-based intra prediction mode, the at least one derived angular prediction mode, and the planar mode based on their respective template costs. The template costs may comprise sum of absolute transformed differences template costs.

The video coding device may be further configured to determine that the respective template costs associated with the set of block vector-based intra prediction modes is below a threshold. The video coding device may, based on the determination that the respective template costs associated with the set of block vector-based intra prediction modes is below the threshold, select the at least one derived block vector-based intra prediction mode from the set of block vector-based intra prediction modes.

The video coding device may be further configured to obtain a first prediction of the block based on the at least one derived block vector-based intra prediction mode from the set of block vector-based intra prediction modes. The video coding device may obtain a second prediction of the block based on the at least one derived angular prediction mode from the set of angular prediction modes, and obtain a third prediction of the block based on the planar mode. The video coding device may calculate a first weight associated with the first prediction, a second weight associated with the second prediction and a third weight associated with the third prediction based on respective SATD template costs associated with the at least one derived block-vector-based intra prediction mode, SATD template costs associated with the at least one derived angular prediction mode, and a SATD template cost associated with the planar mode. The fused prediction may be obtained by blending the first, second, and third predictions based on their respective weights.

The video coding device may be configured to obtain a maximum number of block vector-based intra prediction mode to be used for the first prediction from the set of block vector-based intra prediction modes and a minimum number of block vector-based intra prediction mode to be used for the first prediction from the set of block vector-based intra prediction modes. The video coding device may, based on the obtained maximum number of block vector-based intra prediction mode and the minimum number of block vector-based intra prediction mode, select the at least one derived block vector-based intra prediction mode.

The video coding device may obtain a maximum number of angular prediction mode to be used for the second prediction from the set of angular prediction modes and a minimum number of angular prediction mode to be used for the second prediction from the set of angular prediction modes.

The video coding device may, based on the obtained maximum number of angular prediction mode and the minimum number of angular prediction mode, select the at least one derived angular prediction mode.

The video coding device may be configured to obtain a first prediction of the block based on the at least one derived block vector-based intra prediction mode from the set of block vector-based intra prediction modes. The vide coding device may obtain a second prediction of the block based on the at least one derived angular prediction mode from the set of angular prediction modes, and obtain a third prediction of the block based on the planar mode.

The video coding device may calculate a first weight associated with the first prediction, a second weight associated with the second prediction and a third weight associated with the third prediction based on respective occurrence values associated with the histogram for the at least one derived block-vector-based intra prediction mode, respective occurrence values associated with the histogram for the at least one derived angular prediction mode and an occurrence value associated with the histogram for the planar mode. The fused prediction may be obtained by blending the first, second, and third predictions based on their respective weights.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4a shows an example of adjacent spatial neighboring candidates.
FIG. 4b shows an example of non-adjacent spatial neighboring candidates.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

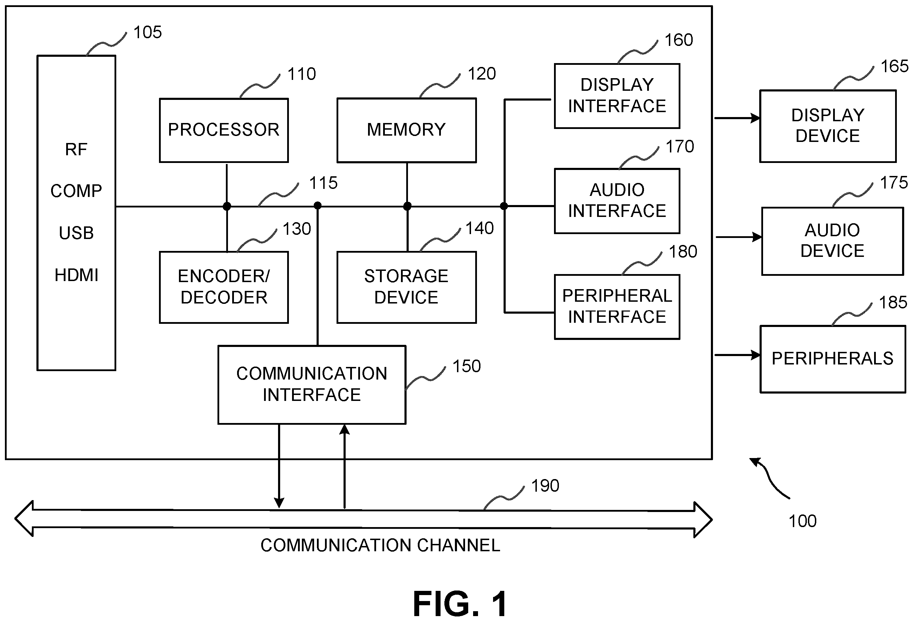

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

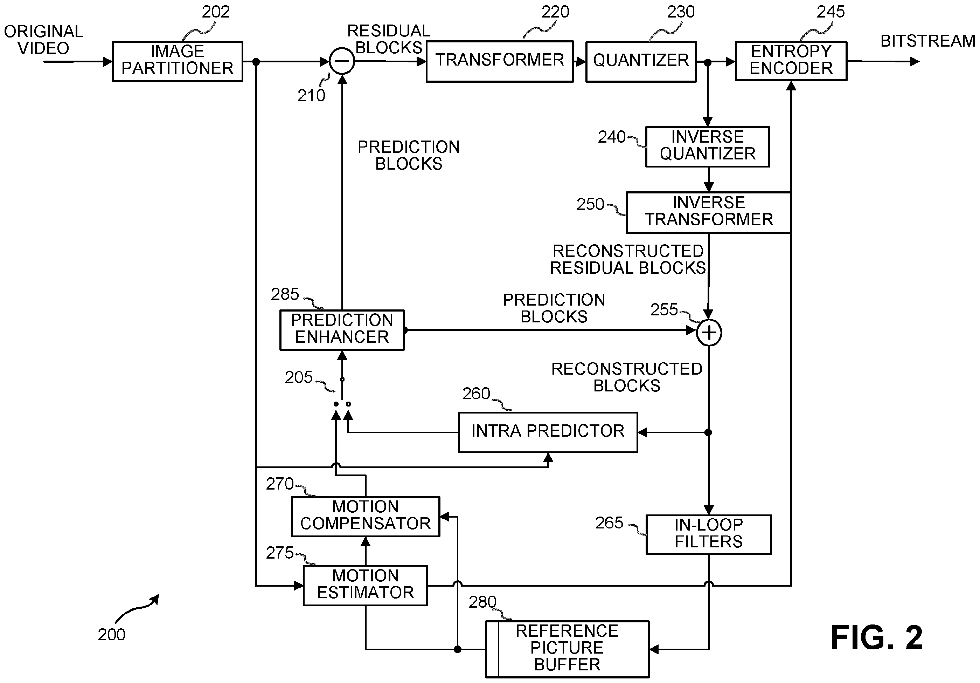

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

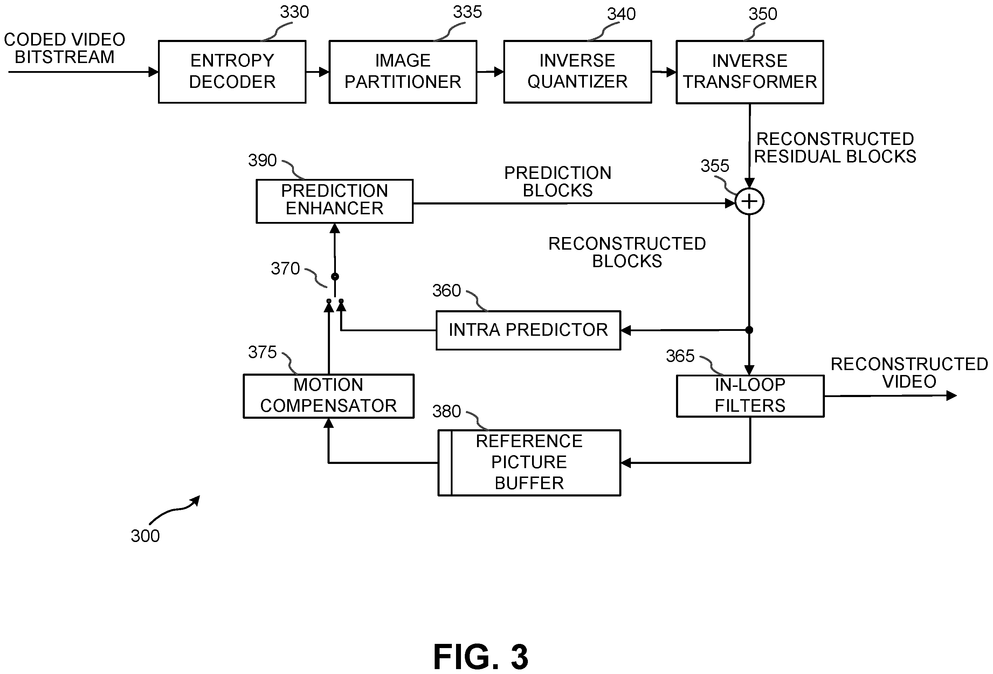

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Disclosed herein are improvements to decoder side intra mode derivation (DIMD) and occurrence-based intra coding (OBIC).

The disclosed systems, methods, and instrumentations relate to video compression. Decoder side intra mode derivation (DIMD) and occurrence-based intra coding (OBIC) may be modified by, for example, providing for adaptively selecting among angular intra prediction, planar prediction, and BV-based prediction and deriving the corresponding blending weights for DIMD and OBIC based on the template cost. BV-based predictors from neighboring blocks with BV predictor(s) may be used to construct the histogram of OBIC mode. OBIC may be employed for chroma blocks. DC mode may be employed with DIMD and OBIC mode. The disclosed systems, methods, and instrumentations may improve the compression efficiency by, for example, reducing the bitrate while maintaining the quality, and/or by improving the quality while maintaining the bitrate.

A device for performing video decoding and/or video encoding may employ Decoder side Intra Mode Derivation (DIMD) mode. DIMD may rely on the assumption that reconstructed pixels surrounding a given block to be predicted carry information to infer the texture directionality in the block. The reconstructed pixels surrounding a given block to be predicted may be associated with intra prediction modes that may, e.g., most likely, generate predictions with preferred, e.g., the highest, qualities.

In DIMD, gradients may be extracted from a context of reconstructed pixels around a block. The gradients may be used to fill a Histogram of Gradients (HoG). The intra prediction modes (IPMs) that give, e.g., most likely give, the predictions with highest qualities may be derived from the HoG. Up to, for example, five intra modes may be derived from the reconstructed neighbor samples, and those five predictors may be combined with the planar mode predictor with the weights derived from the HoG.

A prediction fusion may be applied as a weighted average of the above-noted predictors, e.g., six predictors. The weight associated with planar mode may be fixed to 21/64 (~1/3). The remaining weight of 43/64 (~2/3) may be shared among the five HoG IPMs. The remaining weight may be shared proportionally among the five HoG IPMs according to the amplitude of their respective HoG bars.

Derived intra modes may be included in a primary list of intra most probable modes (MPM). Accordingly, the DIMD process may be performed before the MPM list may be constructed. The primary derived intra mode of a DIMD block may be stored with a block and may be used for MPM list construction of the neighboring blocks.

DIMD with block-vector (BV) based prediction may be employed. A device for performing video decoding and/or video encoding may adaptively select between planar mode and block-vector (BV) mode based prediction obtained from intra template matching (IntraTMP) or intra block copy (IBC) mode of neighboring blocks for blending with angular intra prediction(s). In examples, block vectors of merge candidates, e.g., all merge candidates, may be collected. A sum of absolute transformed differences (SATD) template cost may be used to select between block-vector based prediction and planar prediction. The blending process (e.g., blending weights) associated with DIMD may be used.

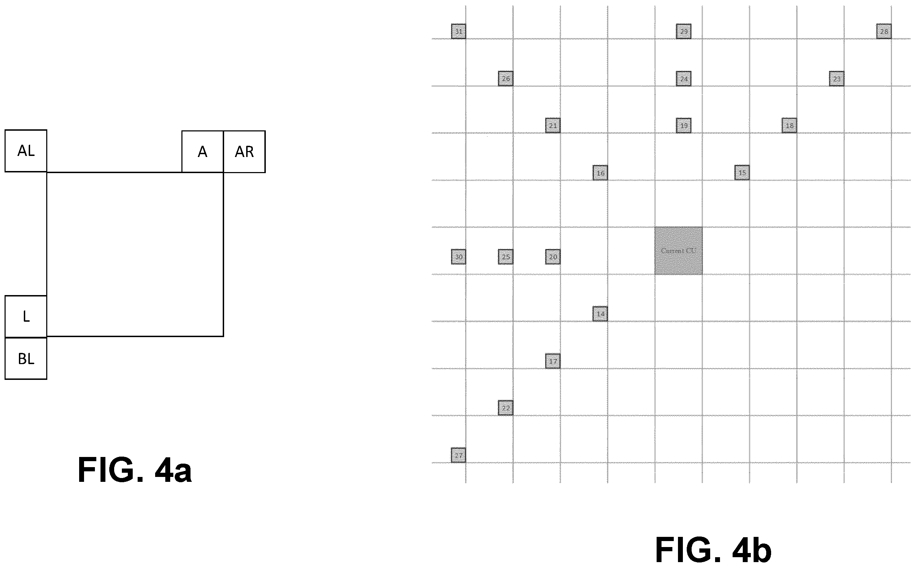

Occurrence-based intra coding (OBIC) mode may be employed. The OBIC mode may comprise deriving intra prediction modes of a current block based on the sample-wise occurrence of the intra modes in the spatial neighborhood of the block. FIG. 4a depicts adjacent spatial neighboring blocks and FIG. 4b depicts non-adjacent spatial neighboring blocks. Adjacent and non-adjacent spatial neighboring blocks, as depicted, for example, in FIG. 4a and FIG. 4b, may be checked and the intra prediction modes of the blocks may be collected into an occurrence histogram. While DIMD mode may employ a Histogram of Gradients (HoG), OBIC introduces a Histogram of occurrence (HoC), which may comprise the intra modes and their associated sample-wise occurrences. The occurrence values may be calculated based on the number of samples that are coded in a particular intra prediction mode in that neighborhood.

In examples, if a uiWidth $\times$ uiHeight block is coded with an IPM mode, the occurrence of the mode in that particular block may be calculated as follows:

$$HoC[IPM] \mathrel{+}= uiWidth \times uiHeight,$$

where uiWidth and uiHeight represent the width and the height, respectively, of a spatial neighboring block.

The occurrences of the existing modes from the spatial neighborhood blocks may be accumulated into the histogram.

Up to, for example, five (5) angular modes with the highest occurrence may be selected from the HoC along with the planar mode or the BV-based mode, and may be used for final prediction by blending the prediction of the selected modes.

Blocks, such as, for example, those mentioned herein, may use more than one intra mode for prediction. In such an example, intra modes, e.g., all the intra modes, of such blocks may be selected and used when creating the OBIC histogram. With respect to DIMD mode, up to, for example, 5 angular modes may be used. With respect to TIMD, up to, for example, 2 modes may be used. With respect to spatial geometric partition mode (SGPM) mode, up to, for example 2 modes may be used. With respect to OBIC, up to, for example, 5 angular modes may be used.

The intra modes of the following blocks may not be considered when creating the histogram of OBIC mode: MIP block; IntraTMP block; and IBC block.

The blending weights may be calculated similar to the DIMD mode, but instead of using gradient values from the template as with DIMD mode, occurrence values are used for OBIC. The weight of the planar mode or the BV-based mode may be decided similarly to DIMD mode.

On the one hand, BV-based prediction may not have been employed, e.g., not be allowed, to replace the angular intra prediction in the DIMD and OBIC. On another hand, the blending weights derived from the histogram value might not, e.g., may not always, be optimal.

Moreover, the OBIC mode may not consider involving BV-based predictors from neighboring blocks with BV predictor(s) when constructing an occurrence histogram. Furthermore, the OBIC mode may be extended for use with chroma blocks.

Systems, methods, and instrumentalities are disclosed herein that may modify, e.g., improve and extend, DIMD mode and OBIC mode. For example, DIMD mode and/or OBIC mode may be modified to provide for adaptively selecting among angular intra prediction, planar prediction, and BV-based prediction. The adaptive selection among angular intra prediction, planar prediction, and BV-based prediction may be based on, for example, the template cost. The systems, methods, and instrumentalities may adaptively derive corresponding blending weights for DIMD and/or OBIC. The blending weights may be derived based on, for example, the template cost. DIMD and/or OBIC may also provide for use of DC mode.

Systems, methods, and instrumentalities may modify OBIC mode to allow BV-based predictors from neighboring blocks with BV predictor(s) to be used in constructing the histogram and to allow OBIC mode to be applied to chroma blocks.

Video encoding and decoding devices may be configured to select among angular intra, BV-based, and planar prediction in DIMD mode. A video coding device, which may be, for example, an encoder device or a decoder device, may comprise at least one processor configured to derive, for a block, a set of block vector-based intra prediction modes. The video coding device may derive a set of angular prediction modes based on a histogram associated with a plurality of neighboring samples of the block. The video coding device may obtain a fused prediction of the block based on at least one derived block vector-based intra prediction mode, at least one derived angular prediction mode, and a planar mode. The video coding device may encode or decode the block based on the fused prediction.

Video encoding and decoding devices may be configured to adaptively select among angular intra prediction, planar prediction, and BV-based prediction for blending of predictions to obtain a final DIMD prediction. The selection may be performed, for example, based on the template cost.

The video coding device may be configured to calculate respective template costs associated with the set of derived block vector-based intra prediction modes. The video coding device may calculate respective template costs associated with the set of derived angular prediction modes, and calculate a template cost associated with the planar mode. The video coding device may select the at least one derived block vector-based intra prediction mode, the at least one derived angular prediction mode, and the planar mode based on their respective template costs. The template costs may comprise sum of absolute transformed differences template costs.

In examples, up to N (e.g., N=5) intra prediction modes may be derived from the HoG, up to M (e.g., M=5) BVs may be obtained from neighboring blocks, and a planar mode may be identified. An SATD template cost may be calculated and used to select up to J (e.g., J=6) predictors from among angular intra prediction, BV-based prediction, and planar prediction. For example, 3 HoG angular intra predictions, 2 BV-based predictions, and a planar prediction with the lowest SATD template cost may be selected and used for obtaining the final prediction. In an example, available modes, e.g., all available modes, may be sorted based on their cost, and the best J modes may be selected for fusion to obtain a final prediction, regardless of the distribution among HoG intra modes, BVs, and planar. In an example, a prediction may be created with, for example, 5 BVs and 1 HoG mode if such order is determined by the cost.

The video coding device may be further configured to determine that the respective template costs associated with the set of block vector-based intra prediction modes is below a threshold. The video coding device may, based on the determination that the respective template costs associated with the set of block vector-based intra prediction modes is below the threshold, select the at least one derived block vector-based intra prediction mode from the set of block vector-based intra prediction modes.

In examples, the BV-based predictions may be selected, e.g., may only be selected, for the final prediction blend once its template cost meets the threshold condition. For example, the first M BV-based predictors with the minimum SATD template costs may be considered for fusion, if their template costs are less than $\alpha$ of the smallest SATD template cost of the angular intra predictor, as indicated by the following:

$$\mathrm{BV}_n \mathrm{IsBlend} = SATD_{\mathrm{BV}_n} < Th$$

$$Th = \alpha \times SATD_{\text{IPM}_1}$$

where $SATD_{\text{IPM}_1}$ represents SATD template cost of IPM$_1$, which is the HOG angular mode with the minimum SATD template cost, and wherein $SATD_{\text{BV}_n}$ represents the cost of the n-th BV.

Alternatively, the threshold *Th* could be a pre-defined specific value.

In examples, the first HoG angular intra predictor with the highest HoG bar may be selected, e.g., may always be selected, for the final prediction blend and may be used as the first DIMD derived intra mode. Furthermore, the second HoG angular intra predictor with the second highest HoG bar, if it is available, may be selected, e.g., may also be always selected, for the final prediction blend and used as the second DIMD derived intra mode.

In examples, the maximum (and/or minimum) number *N* of HoG angular intra predictors, the maximum (and/or minimum) number *M* of BV-based predictors, and/or the maximum (and/or minimum) number j of blending predictors used in DIMD, may be defined a-priori, e.g., may be pre-defined. The video coding device may be configured to obtain a maximum number of block vector-based intra prediction mode to be used for the first prediction from the set of block vector-based intra prediction modes and a minimum number of block vector-based intra prediction mode to be used for the first prediction from the set of block vector-based intra prediction modes. The video coding device may, based on the obtained maximum number of block vector-based intra prediction mode and the minimum number of block vector-based intra prediction mode, select the at least one derived block vector-based intra prediction mode. The video coding device may obtain a maximum number of angular prediction mode to be used for the second prediction from the set of angular prediction modes and a minimum number of angular prediction mode to be used for the second prediction from the set of angular prediction modes. The video coding device may, based on the obtained maximum number of angular prediction mode and the minimum number of angular prediction mode, select the at least one derived angular prediction mode.

For example, it may be determined to employ at least 1 HoG mode, if available, but not more than 3, in determining, e.g., figurating, a blending process, e.g., a final blending process. A similar relation may be applied to BVs. For example, it may be determined to employ at least 1 BV mode, if available, but not more than 3 BVs, in determining, e.g., figurating, a blending process, e.g., a final blending process.

In examples, it may be determined to blend 3 HoG modes, 3 BVs, and a planar for a total of 7 modes in fusion. If, for example, only one BV is available, it may be determined to re-allocate BV modes to HoG modes if more HoG modes are available. For example, 5 HoG modes, 1 BV, and planar may be employed, resulting in 7 modes in the final fusion as may have been intended.

In examples, a maximum (and/or minimum) number *N* of HoG angular intra predictors, the maximum (and/or minimum) number *M* of BV-based predictors, and/or the maximum (and/or minimum) number *J* of blending predictors, if available, that are used in DIMD, may be set based on conditions/parameters, such as, for example, block size, QP, color components, slice types, content types, frame resolution, and/or configuration.

In examples, the maximum (and/or minimum) number *N* of HoG angular intra predictors, the maximum (and/or minimum) number *M* of BV-based predictors, and/or the maximum (and/or minimum) number *J* of blending predictors, if available, that are used in DIMD, may be signaled in one or more of a sequence parameter set (SPS), view parameter set (VPS), picture parameter set (PPS), and/or picture header (PH).

The blending process may be adjusted to accommodate these new possible combinations. In examples, the blending weights may be determined, e.g., derived, based on the SATD template cost. For example, the weights $w_i$ used during a DIMD fusion process may be computed from a SATD cost as follows:

$$w_i = \frac{sumSATD - SATD(DIMD_i)}{2 \times sumSATD}$$

with

$$sumSATD = \sum_{j=1}^{J} SATD(DIMD_j)$$

In examples, the blending weights derivation may be decided by both the amplitude of the HoG bars and the SATD template cost. The video coding device may be configured to obtain a first prediction of the block based on the at least one derived block vector-based intra prediction mode from the set of block vector-based intra prediction modes. The video coding device may obtain a second prediction of the block based on the at least one derived angular prediction mode from the set of angular prediction modes, and obtain a third prediction of the block based on the planar mode. The video coding device may calculate a first weight associated with the first prediction based on respective SATD template costs associated with the at least one derived block-vector-based intra prediction mode, calculate a second weight associated with the second prediction based on SATD template costs (or respective amplitudes of histogram of gradients (HoG) bars) associated with the at least one derived angular prediction mode, and calculate a third weight associated with the third prediction based on a SATD template cost associated with the planar mode. The fused prediction may be obtained by blending the first, second, and third predictions based on their respective weights.

The weights used for HoG angular intra predictions may be derived from the amplitude of the HoG bars, and the weights used for BV-based may be computed from SATD cost. The weight distribution for HoG angular intra predictions and BV-based predictions may be either evenly split, or determined by the number with which each is selected for the final prediction. For example, if 3 HoG angular intra predictions, 2 BV-based predictions, and planar prediction are selected and used for obtaining the final prediction, approximately half weight 32/64 (~1/2) may be shared among the three HoG IPMs, proportionally to the amplitude of their respective HoG bars. The remaining half weight may then be shared among the two BV-based predictors and the planar mode predictor, proportionally to their template SATD costs. Accordingly, half weights may be distributed among HoG mode weights, and other half weights distributed among non-angular (e.g., BVs and planar) mode weights. In an example, if 3 HoG modes and 1 BV may be selected for the final fusion, weights may be distributed in such a way that 48/64 of the weights are distributed among HoG modes and 16/64 is allocated for the selected BV.

In examples, if no BV-based predictor is chosen to be included in the final prediction blend, the blending weights derivation process may remain unchanged, meaning the blending weights may be based on the amplitude of the HoG bars.

In examples, the weight of planar may be fixed to a specific value (e.g., 21/64) if it is included in the final prediction fusion.

Video encoding and decoding devices may be configured to select among angular intra, BV-based, and planar prediction for OBIC fusion.

A video encoding and/or decoding device may be configured to adaptively select, based on template cost, among angular intra prediction, planar prediction, and BV-based prediction for blending to obtain the final OBIC prediction. The related blending weights may be derived from the SATD template cost. The examples described herein with respect to adaptively selecting, based on template cost, among angular intra prediction, planar prediction, and BV-based prediction for DIMD mode, may also apply with respect to OBIC.

A video coding device may be configured to obtain a first prediction of the block based on the at least one derived block vector-based intra prediction mode from the set of block vector-based intra prediction modes. The video coding device may obtain a second prediction of the block based on the at least one derived angular prediction mode from the set of angular prediction modes, and obtain a third prediction of the block based on the planar mode.

The video coding device may calculate the following wights: a first weight associated with the first prediction based on respective occurrence values associated with the histogram for the at least one derived block-vector-based intra prediction mode; a second weight associated with the second prediction based on respective occurrence values associated with the histogram for the at least one derived angular prediction mode; and a third weight associated with the third prediction based on an occurrence value associated with the histogram for the planar mode. The fused prediction may be obtained by blending the first, second, and third predictions based on their respective weights.

OBIC may generate intra prediction modes for a current block by analyzing the sample-wise occurrence of these intra modes in the spatial neighborhood of the block. This method may be applied to derive BV-based predictors. Accordingly, video encoding and/or decoding devices may be configured to consider BV-based predictors from neighboring blocks with BV predictor(s) (such as, for example, IntraTMP, IBC, DIMD, SGPM, OBIC, and/or TIMD block) if constructing a histogram of OBIC mode. The planar mode from the neighboring blocks may also be considered in creating the histogram of OBIC mode.

The occurrence values may be calculated based on the number of samples that are coded in a certain BV in the neighborhood. For example, if a uiWidth × uiHeight block is coded with a BV mode, the occurrence of this BV mode in that particular block may be calculated as follows:

$$HoC[BV] \mathrel{+}= uiWidth \times uiHeight$$

where uiWidth and uiHeight are the width and height of a spatial neighboring block.

In examples, encoding and/or decoding devices may be configured to adaptively select, based on the occurrence of values in the histogram, among angular intra prediction, planar prediction, and BV-based prediction for the blending to generate the final OBIC prediction. The related blending weights may be derived from the occurrence values in the histogram.

Systems, methods, and instrumentations are disclosed to provide OBIC mode for chroma blocks.

Video encoding and decoding devices may be configured to use the OBIC derivation method to derive the chroma intra prediction mode of the current block.

In examples, intra prediction modes of the current chroma block may be derived based on the sample-wise occurrence of the intra modes in the spatial neighborhood of the current chroma block.

The intra prediction mode with the largest HoC amplitude values may be used for performing chroma intra prediction of the current chroma block. If the intra prediction mode derived from the OBIC chroma mode may be the same as the intra prediction mode derived from the DM mode, the intra prediction mode with the second largest HoC amplitude value may be used as the OBIC chroma mode. A CU level flag may be signaled to indicate whether the proposed OBIC chroma mode is applied.

In examples, the intra prediction modes of the current chroma block may be derived based on the sample-wise occurrence of the intra modes of spatial neighborhood of the collocated reconstructed luma samples.

The systems, methods, and instrumentalities described herein in connection with selecting among angular intra, BV-based, and planar prediction in DIMD mode and for OBIC may be applied as well to chroma mode in OBIC.

Systems, methods, and instrumentations are disclosed to provide DC mode for DIMD/OBIC fusion.

In template-based intra mode derivation (TIMD), DC mode may be considered as one possible candidate for generating the final TIMD prediction. However, DC mode has not previously been considered for DIMD/OBIC fusion. Encoding and/or decoding devices may be configured to include DC mode as one possible predictor for generating the final DIMD and/or OBIC fusion.

The disclosed systems, methods, and instrumentalities may be applied in the context of video coding, distribution, and consumption. The disclosed systems, methods, and instrumentalities may apply to both the encoder and decoder.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.

    ii. hypertext transfer protocol (HTTP) live Streaming (HLS) manifest transmitted over HTTP.

    iii. dynamic adaptive streaming over HTTP (DASH) media presentation description (MPD) descriptors, for example as used in DASH and transmitted over HTTP.

    iv. RTP header extensions, for example as used during RTP streaming.

    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include for example, encoding a data stream and modulating a carrier with the encoded data stream The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, the device comprising: a processor configured to:

    derive, for a block, a set of block vector-based intra prediction modes;
    derive a set of angular prediction modes based on a histogram associated with a plurality of neighboring samples of the block;
    obtain a fused prediction of the block based on at least one derived block vector-based intra prediction mode, at least one derived angular prediction mode, and a planar mode; and

decode the block based on the fused prediction.

2. A device for video encoding, the device comprising: a processor configured to:

derive, for a block, a set of block vector-based intra prediction modes;
derive a set of angular prediction modes based on a histogram associated with a plurality of neighboring samples of the block;
obtain a fused prediction of the block based on at least one derived block vector-based intra prediction mode, at least one derived angular prediction mode, and a planar mode; and
encode the block based on the fused prediction.

3. The device of claim 1 or claim 2, wherein the processor is configured to:

calculate respective template costs associated with the set of derived block vector-based intra prediction modes;
calculate respective template costs associated with the set of derived angular prediction modes;
calculate a template cost associated with the planar mode; and
select the at least one derived block vector-based intra prediction mode, the at least one derived angular prediction mode, and the planar mode based on their respective template costs.

4. The device of any one of claims 1-3, wherein the processor is configured to:

determine that the respective template costs associated with the set of block vector-based intra prediction modes is below a threshold; and
based on the determination that the respective template costs associated with the set of block vector-based intra prediction modes is below the threshold, select the at least one derived block vector-based intra prediction mode from the set of block vector-based intra prediction modes.

5. The device of any one of claims 3 or 4, wherein the respective template costs comprise sum of absolute transformed differences (SATD) template costs.

6. The device of any one of claims 1-5, wherein the processor is configured to:

obtain a first prediction of the block based on the at least one derived block vector-based intra prediction mode from the set of block vector-based intra prediction modes;
obtain a second prediction of the block based on the at least one derived angular prediction mode from the set of angular prediction modes;

obtain a third prediction of the block based on the planar mode;
calculate a first weight associated with the first prediction based on respective SATD template costs associated with the at least one derived block-vector-based intra prediction mode;
calculate a second weight associated with the second prediction based on SATD template costs associated with the at least one derived angular prediction mode; and
calculate a third weight associated with the third prediction based on a SATD template cost associated with the planar mode, wherein the fused prediction is obtained by blending the first, second, and third predictions based on their respective weights.

7. The device of any one of claims 1-6, wherein the processor is configured to:

obtain a maximum number of block vector-based intra prediction mode to be used for the first prediction from the set of block vector-based intra prediction modes and a minimum number of block vector-based intra prediction mode to be used for the first prediction from the set of block vector-based intra prediction modes;
based on the obtained maximum number of block vector-based intra prediction mode and the minimum number of block vector-based intra prediction mode, select the at least one derived block vector-based intra prediction mode;
obtain a maximum number of angular prediction mode to be used for the second prediction from the set of angular prediction modes and a minimum number of angular prediction mode to be used for the second prediction from the set of angular prediction modes; and
based on the obtained maximum number of angular prediction mode and the minimum number of angular prediction mode, select the at least one derived angular prediction mode.

8. The device of any one of claims 1-5 or 7, wherein the processor is configured to:

obtain a first prediction of the block based on the at least one derived block vector-based intra prediction mode from the set of block vector-based intra prediction modes;
obtain a second prediction of the block based on the at least one derived angular prediction mode from the set of angular prediction modes;
obtain a third prediction of the block based on the planar mode;
calculate a first weight associated with the first prediction based on respective occurrence values associated with the histogram for the at least one derived block-vector-based intra prediction mode;

calculate a second weight associated with the second prediction based on respective occurrence values associated with the histogram for the at least one derived angular prediction mode; and

calculate a third weight associated with the third prediction based on an occurrence value associated with the histogram for the planar mode, wherein the fused prediction is obtained by blending the first, second and third predictions based on their respective weights.

9. The device of any one of claims 1, 2, or 8, wherein the set of block vector-based intra prediction modes is associated with at least one of an intra template matching prediction (TMP) mode, an intra block copy (IBC), a decoder side intra mode derivation (DIMD) mode, a spatial geometric partition mode (SGPM), an occurrence-based intra coding (OBIC) mode, or a template-based intra mode derivation (TIMD) mode.

10. A method for video decoding, the method comprising:

deriving, for a block, a set of block vector-based intra prediction modes;
deriving a set of angular prediction modes based on a histogram associated with a plurality of neighboring samples of the block;
obtaining a fused prediction of the block based on at least one derived block vector-based intra prediction mode, at least one derived angular prediction mode, and a planar mode; and
decoding the block based on the fused prediction.

11. A method for video encoding, the method comprising:

deriving, for a block, a set of block vector-based intra prediction modes;
deriving a set of angular prediction modes based on a histogram associated with a plurality of neighboring samples of the block;
obtaining a fused prediction of the block based on at least one derived block vector-based intra prediction mode, at least one derived angular prediction mode, and a planar mode; and
encoding the block based on the fused prediction.

12. The method of claim 10 or 11, wherein the method comprises:

calculating respective template costs associated with the set of derived block vector-based intra prediction modes;
calculating respective template costs associated with the set of derived angular prediction modes;
calculating a template cost associated with the planar mode; and
selecting the at least one derived block vector-based intra prediction mode, the at least one derived angular prediction mode, and the planar mode based on their respective template costs.

13. The method of any one of claims 10-12, wherein the method comprises:

obtaining a first prediction of the block based on the at least one derived block vector-based intra prediction mode from the set of block vector-based intra prediction modes;
obtaining a second prediction of the block based on the at least one derived angular prediction mode from the set of angular prediction modes;
obtaining a third prediction of the block based on the planar mode;
calculating a first weight associated with the first prediction based on respective SATD template costs associated with the at least one derived block-vector-based intra prediction mode;
calculating a second weight associated with the second prediction based on SATD template costs associated with the at least one derived angular prediction mode; and
calculating a third weight associated with the third prediction based on a SATD template cost associated with the planar mode, wherein the fused prediction is obtained by blending the first, second, and third predictions based on their respective weights.

14. The method of any one of claims 10-12, wherein the method comprises:

obtaining a first prediction of the block based on the at least one derived block vector-based intra prediction mode from the set of block vector-based intra prediction modes;
obtaining a second prediction of the block based on the at least one derived angular prediction mode from the set of angular prediction modes;
obtaining a third prediction of the block based on the planar mode;
calculating a first weight associated with the first prediction based on respective occurrence values associated with the histogram for the at least one derived block-vector-based intra prediction mode;
calculating a second weight associated with the second prediction based on respective occurrence values associated with the histogram for the at least one derived angular prediction mode; and

calculating a third weight associated with the third prediction based on an occurrence value associated with the histogram for the planar mode, wherein the fused prediction is obtained by blending the first, second and third predictions based on their respective weights.

15. The method of any one of claims 10-14, wherein the method comprises:

obtaining a maximum number of block vector-based intra prediction mode to be used for the first prediction from the set of block vector-based intra prediction modes and a minimum number of block vector-based intra prediction mode to be used for the first prediction from the set of block vector-based intra prediction modes;

based on the obtained maximum number of block vector-based intra prediction mode and the minimum number of block vector-based intra prediction mode, selecting the at least one derived block vector-based intra prediction mode;

obtaining a maximum number of angular prediction mode to be used for the second prediction from the set of angular prediction modes and a minimum number of angular prediction mode to be used for the second prediction from the set of angular prediction modes; and

based on the obtained maximum number of angular prediction mode and the minimum number of angular prediction mode, selecting the at least one derived angular prediction mode.

**FIG. 1**

EP 4 730 775 A1

FIG. 2

EP 4 730 775 A1

FIG. 3

Diagram 300:

CODED VIDEO BITSTREAM → ENTROPY DECODER (330) → IMAGE PARTITIONER (335) → INVERSE QUANTIZER (340) → INVERSE TRANSFORMER (350) → RECONSTRUCTED RESIDUAL BLOCKS → (+) (355) → RECONSTRUCTED BLOCKS → IN-LOOP FILTERS (365) → RECONSTRUCTED VIDEO

IN-LOOP FILTERS (365) → REFERENCE PICTURE BUFFER (380)

INTRA PREDICTOR (360)

PREDICTION ENHANCER (390) → PREDICTION BLOCKS → (+) (355)

Switch (370)

MOTION COMPENSATOR (375)

FIG. 4b

FIG. 4a

Europäisches
Patentamt

European
Patent Office

Office européen
des brevets

# EUROPEAN SEARCH REPORT

**Application Number**

EP 24 30 6718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/ documents/34_Rennes/wg11/JVET-AH2025-v1.zi p JVET-AH2025-v1.docx [retrieved on 2024-06-26] * abstract * * Sections 1 and 2 * * Sections 3.1.5 and 3.1.5.1 * * Section 3.1.8 * * Section 3.1.17 * ----- | 1-15 | INV. H04N19/11 H04N19/105 H04N19/147 H04N19/176 H04N19/593 |
| A | ABDOLI (ATEME) M ET AL: "Non-CE3: Decoder-side Intra Mode Derivation (DIMD) with prediction fusion using Planar", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0449 ; m48570 4 July 2019 (2019-07-04), XP030219611, Retrieved from the Internet: URL:http://phenix.int-evry.fr/jvet/doc_end _user/documents/15_Gothenburg/wg11/JVET-O0 449-v2.zip JVET-O0449_v2.docx [retrieved on 2019-07-04] * abstract * * Section 4 * ----- -/-- | 1-15 | TECHNICAL FIELDS SEARCHED (IPC) H04N |

The present search report has been drawn up for all claims

| Place of search | Date of completion of the search | Examiner |
|---|---|---|
| The Hague | 17 April 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 30 6718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUVALARI (XIAOMI) R G ET AL: "EE2-2.2: Occurrence-based intra coding (OBIC)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0076 10 April 2024 (2024-04-10), XP030317311, Retrieved from the Internet: URL:https://jvet-experts.org/doc_end_user/ documents/34_Rennes/wg11/JVET-AH0076-v1.zi p JVET-AH0076_v1.docx [retrieved on 2024-04-10] * abstract * * Section 2 * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 17 April 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)